# EUROPEAN PATENT APPLICATION

(11) **EP 4 438 982 A1**
(43) Date of publication of application: **02.10.2024**
(21) Application number: 22897757.5
(22) Date of filing: 21.11.2022
(51) Int. Cl.: F25D 29/00, G09F 11/00

(54) **DISPLAY ASSEMBLY AND REFRIGERATOR**

(30) Priority: 25.11.2021 CN 202111414296
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: REN, Shufei, Qingdao, Shandong 266101 (CN); WANG, Xiaoyan, Qingdao, Shandong 266101 (CN); ZHAO, Fa, Qingdao, Shandong 266101 (CN); DOU, Jinqiang, Qingdao, Shandong 266101 (CN)
(74) Representative: Winter, Brandl - Partnerschaft mbB
(86) International application number: PCT/CN2022/133222
(87) International publication number: WO 2023/093674

(57) **Abstract**

A display assembly and a refrigerator. The display assembly comprises: a display panel, which is used for displaying content, wherein the display panel is partitioned to form a plurality of display areas, and at least two display areas have different colors and different surface thicknesses. According to the display assembly and the refrigerator, a display panel is configured to form a plurality of display areas in a partitioned manner, and at least two display areas have different colors and different surface thicknesses, such that the display assembly has a partitioned, multi-color and layered appearance effect, the appearance grade is improved, and thus a more intuitive visual and tactile experience can be provided for a user.

## Description

### TECHNICAL FIELD

The present application belongs to the technical field of refrigeration devices, and more particularly relates to a display assembly and a refrigerator.

### BACKGROUND ART

Currently, common display methods in refrigerators involve designing all touch and display content on a single display panel, resulting in a uniform appearance. For refrigerators increasingly equipped with more functions, simple arrangements of icons are no longer sufficient to meet users' experience needs. Some refrigerators differentiate display content by assembling multiple distinct components. However, this assembly method for sectional display of different functions adds to the product's complexity, potentially leading to quality issues, including assembly looseness and susceptibility to ungluing.

### SUMMARY OF THE INVENTION

An object of the present application is to provide a display assembly that offers users a more intuitive visual and tactile experience.

A further object of the present application is to reduce the assembly components of the display panel.

In particular, the present application is directed to a display assembly comprising a display panel for displaying content; wherein the display panel is divided into a plurality of display areas, and at least two of the display areas have different colors and different surface thicknesses.

Further, the display panel is configured such that two adjacent display areas display different functional content and have different colors and different surface thicknesses.

Further, the display panel is formed in one piece using an in-mold injection process.

Further, the display assembly further comprises a fixed bracket positioned behind the display panel; and at least one touch membrane, sandwiched between the fixed bracket and the display panel.

Further, the display panel has a uniform wall thickness, and different surface thicknesses of the display areas are achieved through variations in convexity and concavity on a front-and-back direction; the fixed bracket has the same variations in convexity and concavity as the display panel.

Further, the number of touch membranes is plural, and each touch membrane has a one-to-one correspondence with the display areas.

Further, the display panel has a plurality of first hooks extending rearward at its upper and lower portions; the fixed bracket has a plurality of slots at positions corresponding to the first hooks, and a plurality of locking protrusions are formed on a rear side of the fixed bracket at positions corresponding to the slots, each first hook passes through the relative slot and locks with the corresponding locking protrusion.

Further, the display assembly further comprises a circuit board positioned behind the fixed bracket; wherein the fixed bracket defines a plurality of second hooks extending rearward at its upper and lower ends, and the circuit board is clamped between the second hooks on the upper and lower ends; and/or
the display panel further has a plurality of fixing columns extending rearward, a plurality of notches are formed in the fixed bracket at positions corresponding to the fixing columns, and a plurality of fixing holes are formed on the circuit board at positions corresponding to the fixing columns, the circuit board and the display panel are secured with each other via using fastening elements through the fixing holes, notches, and fixing columns.

Further, the display assembly further comprises a rear cover configured to snap-fit with the display panel, wherein the rear cover together with the display panel define a space accommodating the touch membrane, the fixed bracket, and the circuit board.

The present application is also directed to a refrigerator comprising the aforementioned display assembly.

The display assembly and refrigerator of the present application achieve these objects by dividing the display panel into multiple display areas, with at least two areas having different colors and surface thicknesses. This design gives the display assembly a sectional, multi-color, and layered appearance, elevating the aesthetic quality and providing users with a more intuitive visual and tactile experience.

Moreover, the display panel of the display assembly is produced using the in-mold injection molding process, enabling a single component to achieve the appearance effect of multiple assembled components, thereby reducing assembly parts and enhancing the product's level of refinement.

The above and other objects, advantages and features of the present application will become more apparent to those skilled in the art from the following detailed description of specific embodiments thereof taken in conjunction with the accompanying drawings.

### BRIEF DESCRIPTION OF THE DRAWINGS

Some specific embodiments of the invention will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic structural diagram of a refrigerator having a display assembly according to an embodiment of the present application;
FIG. 2 is a three-dimensional schematic diagram of the display assembly shown in FIG. 1;
FIG. 3 is another three-dimensional schematic diagram of the display assembly shown in FIG. 1;
FIG. 4 is a partial sectional view taken along line A-A in FIG. 1 of the display assembly;
FIG. 5 is an exploded schematic diagram of the display assembly shown in FIG. 1;
FIG. 6 is another exploded schematic diagram of the display assembly shown in FIG. 1;
FIG. 7 is a structural schematic diagram of touch membranes and a fixed bracket of the display assembly shown in FIG. 1;
FIG. 8 is a structural schematic diagram of a display panel and the fixed bracket of the display assembly shown in FIG. 1; and
FIG. 9 is a reference example diagram of a usage state of the display assembly shown in FIG. 1.

### DETAILED DESCRIPTION

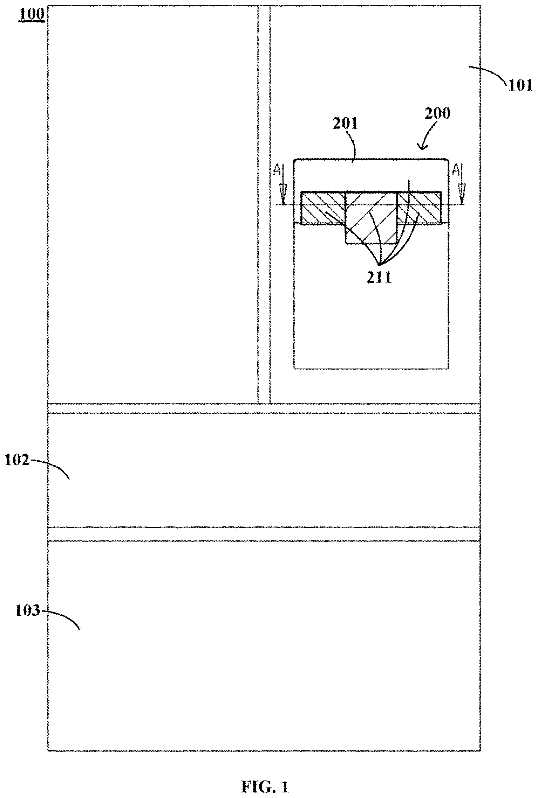

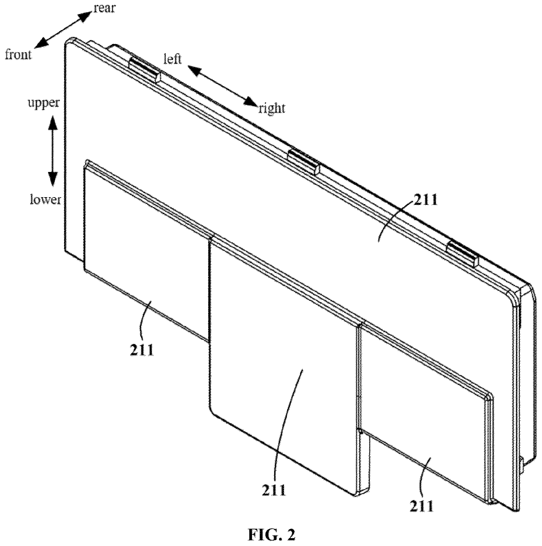

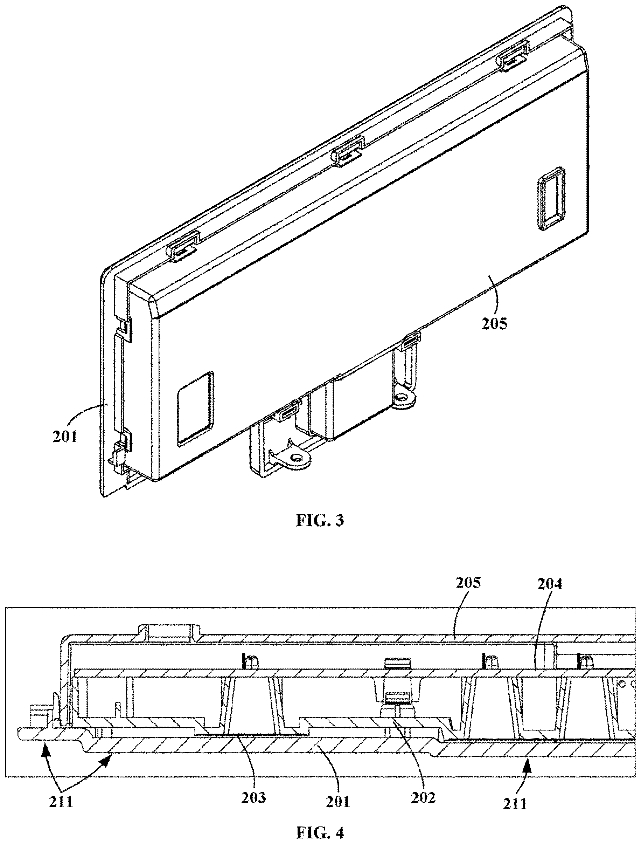

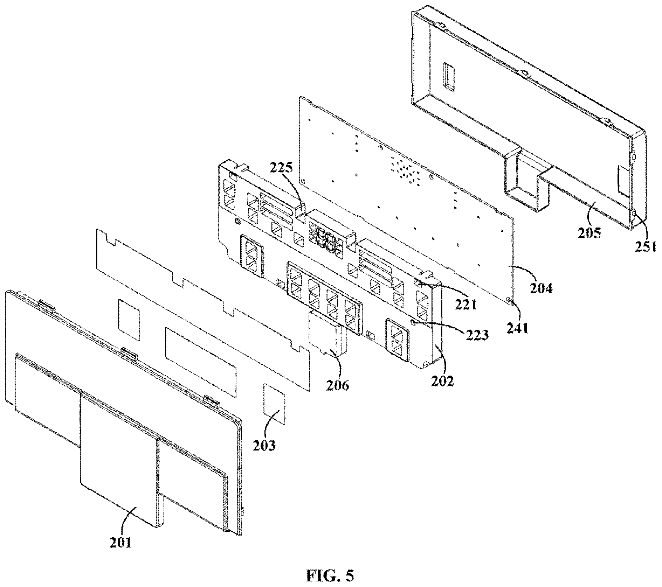

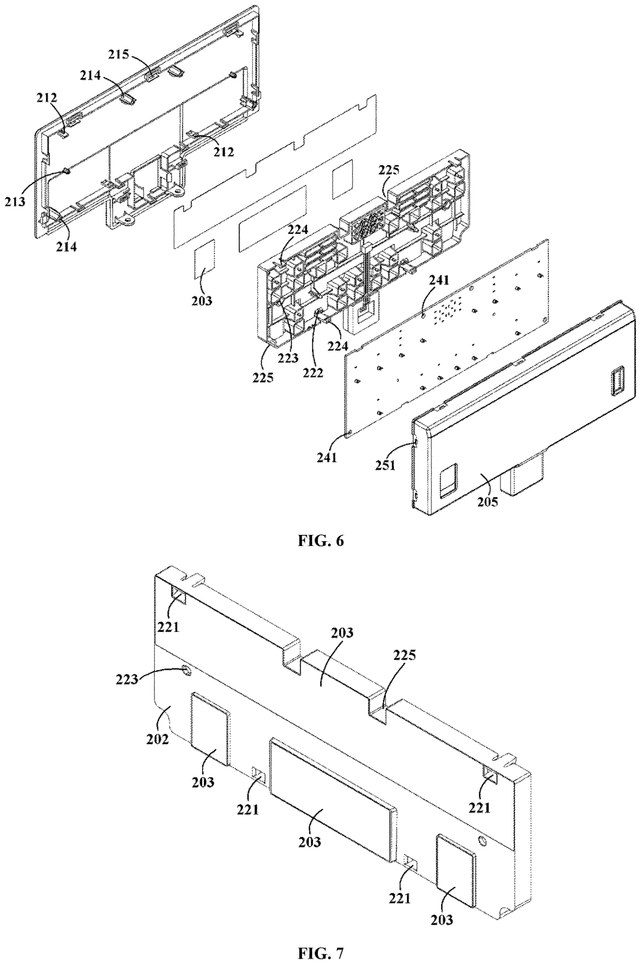

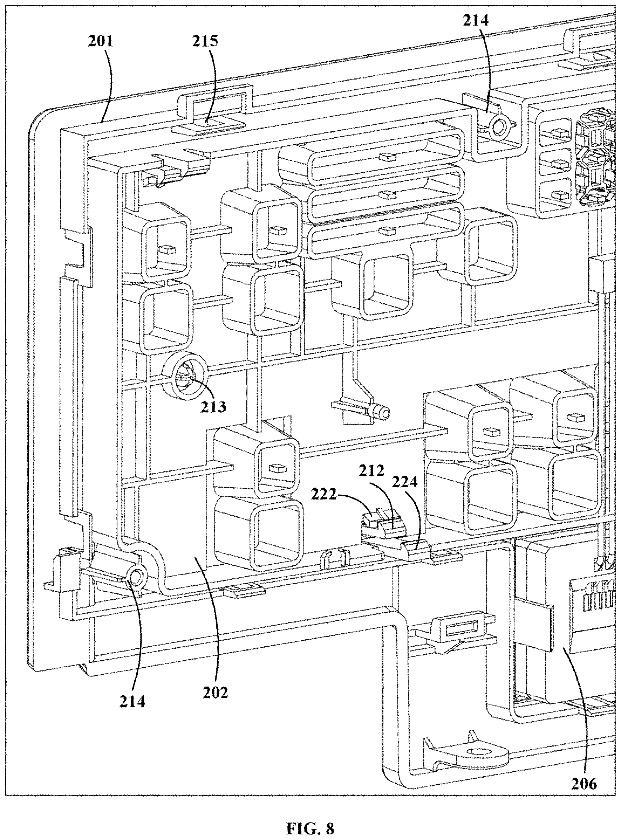

FIG. 1 is a schematic structural diagram of a refrigerator 100 with a display assembly 200 according to an embodiment of the present application. FIG. 2 is a three-dimensional schematic diagram of the display assembly 200 shown in FIG. 1. FIG. 3 is another three-dimensional schematic diagram of the display assembly 200 shown in FIG. 1. FIG. 4 is a partial sectional view along line A-A in FIG. 1 of the display assembly 200. FIG. 5 is an exploded schematic diagram of the display assembly 200 shown in FIG. 1. FIG. 6 is another exploded schematic diagram of the display assembly 200 shown in FIG. 1. FIG. 7 is a structural schematic diagram of touch membranes 203 and a fixed bracket 202 of the display assembly 200 shown in FIG. 1. FIG. 8 is a structural schematic diagram of a display panel 201 and the fixed bracket 202 of the display assembly 200 shown in FIG. 1.

As shown in FIGS. 1 and 2, an embodiment of the present application provides the display assembly 200, comprising: the display panel 201 for displaying content; wherein the display panel 201 is divided into a plurality of display areas 211, and at least two of the display areas 211 have different colors and different surface thicknesses. The display assembly 200 of this embodiment, by setting the display panel 201 to be divided into a plurality of display areas 211, with at least two display areas 211 having different colors and different surface thicknesses, enables the display assembly 200 to have a sectional, multi-color, and layered appearance effect, elevating the aesthetic level and providing users with a more intuitive visual and tactile experience.

This embodiment also provides the refrigerator 100 equipped with the aforementioned display assembly 200. The display assembly 200 is typically mounted on a door of the refrigerator 100. The refrigerator 100 of this embodiment is a storage device containing a refrigeration system, generally including a cabinet, the door, and a compression refrigeration system. The cabinet consists of an outer shell, an inner liner, and an insulating layer located between the outer shell and the inner liner. The inner liner of the cabinet defines at least one storage compartment. Typically, there are multiple storage compartments, such as a refrigeration compartment, a freezing compartment, and a variable temperature compartment, etc. The number and functions of the storage compartments can be configured based on predefined requirements. A preservation temperature of the refrigeration compartment can be 2∼9'C, or possibly 4~7°C; a preservation temperature of the freezing compartment can be -22~-14°C, or possibly -20~-16°C. The freezing compartment can be located below the refrigeration compartment, and the variable temperature compartment can be positioned between the freezing and refrigeration compartments. A preservation temperature of the variable temperature compartment can be adjusted as needed to store suitable food or act as a fresh-keeping storage room. As shown in FIG. 1, a swivel door body 101 is arranged at a front side of an upper refrigeration compartment, with pull-out storage devices 102 and 103 set below the refrigeration compartment, and the display assembly 200 is mounted on the swivel door body 101.

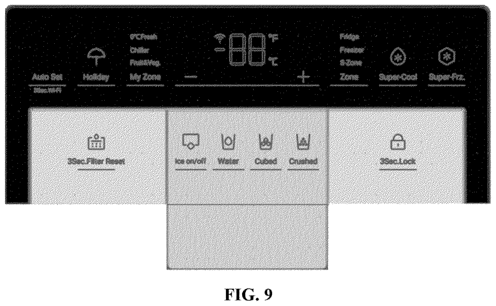

In some embodiments of the display assembly 200 of this invention, the display panel 201 is configured such that two adjacent display areas 211 display different functional content, each with distinct colors and surface thicknesses. By utilizing adjacent display areas 211 to show different functions of the refrigerator 100 with different colors and surface thicknesses, the independence of each display area 211 is further enhanced. This arrangement ensures a sectional, multi-color, and layered appearance effect of the display panel 201, thereby providing users with a more intuitive operation experience. Typically, the display area 211 located in a middle part of the display panel 201 has a lighter color and displays a main functional content of the refrigerator 100. FIG. 9 is a reference example diagram of a usage state of the display assembly 200 shown in FIG.1. As can be clearly seen from FIG. 9, by sectioning, coloring, and layering the display panel 201, the display assembly 200 presents an interface that is visually superior and easier to recognize and operate.

In some embodiments, the display panel 201 of the display assembly 200 is formed in one piece using the in-mold injection process. By forming the display panel 201 in one piece using the in-mold injection process, the appearance effect of multiple components assembled together can be achieved with a single part, reducing the number of assembly parts and enhancing the product's level of refinement.

The display assembly 200 of this embodiment further includes: a fixed bracket 202 and at least one touch membrane 203. The fixed bracket 202 is positioned behind the display panel 201. The touch membrane 203 is sandwiched between the fixed bracket 202 and the display panel 201.

In some embodiments, the display panel 201 of the display assembly 200 has a uniform wall thickness, and the different surface thicknesses of display areas 211 are achieved through variations in convexity and concavity on a front-and-back direction; the fixed bracket 202 has the same variations in convexity and concavity as the display panel 201. As shown in FIG. 4, the display panel 201 has a uniform front and back wall thickness, but adjacent display areas 211 protrude forward to different extents, resulting in different surface thicknesses for adjacent display areas 211. By setting the display panel 201 to have a uniform wall thickness, with different surface thicknesses of display areas 211 achieved solely through variations in front and back convexity and concavity, and matching the convexity and concavity changes in different areas of the fixed bracket 202 with those of the display panel 201, it is possible to ensure simplified components while maintaining touch sensitivity.

In some embodiments, the display assembly 200 includes a plurality of touch membranes 203, each corresponding to one of the display areas 211. By configuring each touch membrane 203 to correspond with the display areas 211, each touch membrane 203 can closely adhere to its corresponding display area 211 and the respective area of the fixed bracket 202, further ensuring touch sensitivity. As shown in FIGS. 2, 5, and 7, the display panel 201 has four display areas 211, correspondingly, the fixed bracket 202 has four areas equipped with touch membranes 203, and there are four touch membranes 203.

In some embodiments of the display assembly 200 of this invention, a plurality of first hooks 212 extend rearward from an upper portion and a lower portion of the display panel 201; the fixed bracket 202 has a plurality of slots 221 at positions corresponding to the first hooks 212, and a locking protrusion 222 is formed on a rear side face of the fixed bracket 202 corresponding to each slot 221, the first hook 212 is passing through the slot 221 and locking with the locking protrusion 222. This configuration ensures a stable attachment of the display panel 201 to the fixed bracket 202 and facilitates easy assembly. As shown in FIGS. 5, 6, and 8, the display panel 201 defines two first hooks 212 at both its upper and lower portions, with the fixed bracket 202 having four slots 221 corresponding to the first hooks 212, and each slot 221 corresponding to one locking protrusion 222. The hooks of the first hooks 212 located at the upper portion bend downwards, while those at the lower portion bend upwards. The locking protrusions 222 corresponding to upper slots 221 are below the upper slots 221, and the locking protrusions 222 corresponding to lower slots 221 are above the lower slots 221. Additionally, the display panel 201 further has a plurality of positioning posts 213 extending rearward; the fixed bracket 202 has a plurality of positioning holes 223 at positions corresponding to the positioning posts 213, and the positioning posts 213 are inserted into the corresponding positioning holes 223. As illustrated in FIGS. 5 and 6, two positioning posts 213 are extending rearward from the middle part of the display panel 201, and two corresponding positioning holes 223 are disposed on the fixed bracket 202.

In some embodiments, the display assembly 200 of this invention further includes: a circuit board 204 positioned behind the fixed bracket 202. The fixed bracket 202 extends rearward at its upper and lower ends to form a plurality of second hooks 224, the circuit board 204 is clamped between the upper and lower second hooks 224. The display panel 201 further has a plurality of fixing pillars 214 extending rearward, a plurality of notches 225 are formed in the fixed bracket 202 at positions corresponding to the fixing pillars 214, and a plurality of fixing holes 241 are defined on the circuit board 204 at positions corresponding to the fixing pillars 214. Fastening elements (not shown) are used to secure the circuit board 204 to the display panel 201 by passing through the fixing holes 241, notches 225, and fixing pillars 214. This ensures a stable installation of the circuit board 204 within the display assembly 200. As depicted in FIGS. 5, 6, and 8, the fixed bracket 202 defines two second hooks 224 extending rearward at both its upper and lower ends, the hooks of the second hooks 224 on the upper end bend downwards and those at the lower end bend upwards, thus allowing the circuit board 204 to be clamped between the second hooks 224 on the upper and lower ends; the display panel 201 additionally defines two fixing pillars 214 at both its upper and lower portions, correspondingly, notches 225 are formed at the upper and lower ends of the fixed bracket 202, and four fixing holes 241 are formed on the circuit board 204.

In some embodiments, the display assembly 200 of this invention further includes: a rear cover 205 configured to snap-fit with the display panel 201, and the rear cover 205 together with the display panel 201 define a space accommodating the touch membranes 203, the fixed bracket 202, and the circuit board 204. As shown in FIGS. 6 and 8, the display panel 201 defines a plurality of snap-fit rings 215 on a perimeter thereof, and a plurality of protrusions 251 corresponding to the snap-fit rings 215 are formed on a perimeter of the rear cover 205. The protrusions 251 fit into the corresponding snap-fit rings 215 to secure the rear cover 205 to the display panel 201.

As shown in FIG. 8, the display panel 201 has an installation groove below a middle display area 211, designed for mounting a human sensing device 206. By integrating the human sensing device 206 within the display assembly 200, it can detect the proximity of a person, thereby controlling the display assembly 200 based on the proximity signal of a human body, such as turning on or off, changing display content, etc.

The display assembly 200 and refrigerator 100 of this invention, by configuring the display panel 201 to be divided into a plurality of display areas 211, with at least two display areas 211 having different colors and different surface thicknesses, allow the display assembly 200 to have a sectional, multi-color, and layered appearance effect. This elevates the aesthetic level and provides users with a more intuitive visual and tactile experience.

Furthermore, the display panel 201 of the display assembly 200 in this embodiment is formed in one piece using the in-mold injection process, allowing a single part to achieve the appearance effect of multiple assembled components, thereby reducing the number of assembly parts and enhancing the product's refinement level.

So far, it should be appreciated by those skilled in the art that while various exemplary embodiments of the invention have been shown and described in detail herein, many other variations or modifications which are consistent with the principles of this invention may be determined or derived directly from the disclosure of the present application without departing from the spirit and scope of the invention. Accordingly, the scope of the invention should be understood and interpreted to cover all such other variations or modifications.

## Claims

1. A display assembly, comprising:
a display panel for displaying content; wherein the display panel is divided into a plurality of display areas, and at least two of the display areas have different colors and different surface thicknesses.

2. The display assembly according to claim 1, wherein the display panel is configured such that two adjacent display areas display different functional content and have different colors and different surface thicknesses.

3. The display assembly according to claim 1, wherein the display panel is formed in one piece using an in-mold injection process.

4. The display assembly according to any one of claims 1-3, further comprising:
a fixed bracket, positioned behind the display panel; and
at least one touch membrane, sandwiched between the fixed bracket and the display panel.

5. The display assembly according to claim 4, wherein the display panel has a uniform wall thickness, and different surface thicknesses of the display areas are achieved through variations in convexity and concavity on a front-and-back direction; the fixed bracket has the same variations in convexity and concavity as the display panel.

6. The display assembly according to claim 4, wherein the number of touch membranes is plural, and each touch membrane has a one-to-one correspondence with the display areas.

7. The display assembly according to claim 4, wherein the display panel has a plurality of first hooks extending rearward at its upper and lower portions; the fixed bracket has a plurality of slots at positions corresponding to the first hooks, and a plurality of locking protrusions are formed on a rear side of the fixed bracket at positions corresponding to the slots, each first hook passes through the relative slot and locks with the corresponding locking protrusion.

8. The display assembly according to claim 4, further comprising:
a circuit board, positioned behind the fixed bracket; wherein the fixed bracket defines a plurality of second hooks extending rearward at its upper and lower ends, and the circuit board is clamped between the second hooks on the upper and lower ends; and/or
the display panel further has a plurality of fixing columns extending rearward, a plurality of notches are formed in the fixed bracket at positions corresponding to the fixing columns, and a plurality of fixing holes are formed on the circuit board at positions corresponding to the fixing columns, the circuit board and the display panel are secured with each other via using fastening elements through the fixing holes, notches, and fixing columns.

9. The display assembly according to claim 8, further comprising:
a rear cover, configured to snap-fit with the display panel, wherein the rear cover together with the display panel define a space accommodating the touch membrane, the fixed bracket, and the circuit board.

10. A refrigerator, comprising the display assembly according to any one of claims 1-9.
